(19)

Europäisches
Patentamt
European
Patent Office
Office européen
des brevets

(11) **EP 2 503 304 A1**

(12) **EUROPEAN PATENT APPLICATION**
published in accordance with Art. 153(4) EPC

(43) Date of publication:
**26.09.2012 Bulletin 2012/39**

(51) Int Cl.:
***G01F 1/66*** (2006.01)  ***H04R 1/06*** (2006.01)

(21) Application number: **10831328.9**

(22) Date of filing: **17.11.2010**

(86) International application number:
**PCT/JP2010/006731**

(87) International publication number:
**WO 2011/061929 (26.05.2011 Gazette 2011/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.11.2009 JP 2009263726**

(71) Applicant: **Panasonic Corporation
Kadoma-shi
Osaka 571-8501 (JP)**

(72) Inventors:
• **OZAKI, Yukinori
Osaka 540-6207 (JP)**

• **FUJII, Yuji
Osaka 540-6207 (JP)**
• **MIYATA, Hajime
Osaka 540-6207 (JP)**
• **NAKANO, Makoto
Osaka 540-6207 (JP)**

(74) Representative: **Schwabe - Sandmair - Marx
Patentanwälte
Stuntzstraße 16
81677 München (DE)**

(54) **ULTRASONIC FLOWMETER**

(57)    In an ultrasonic flow meter device of the present invention, a compressive conductive fastener member (9) including conductive parts (25a, 25b) is retained between a casing (1) having a fluid passage (2) in which a fluid which is a measurement target flows; ultrasonic transmitters/receivers (6, 7) mounted to the casing (1), and a control printed board (8) disposed to face the ultrasonic transmitters/receivers (6, 7), and in this state, the control printed board (8) is fastened. Thereby, the ultrasonic transmitters/receivers (6, 7) are electrically connected to the control printed board (8) without the use of lead wires. A cost increase can be suppressed, and an influence of an outside noise can be mitigated because of omission of the lead wires. Therefore, reliability of the ultrasonic transmitters/receivers (6, 7) can be improved.

Fig. 2

| | |
|---|---|
| 17 PIEZOELECTRIC ELEMENT | 22 CONDUCTIVE ELEMENT |
| 18 CASE | 23 ACOUSTIC MATCHING LAYER |
| 19 FLANGE | 25 CONDUCTIVE PART |
| 20 TERMINAL PLATE | 29 PROJECTION (SEALING MEANS) |
| 21 OUTSIDE ELECTRODE | 33 COMPRESSION RATE RESTRICTING MEANS |

**EP 2 503 304 A1**

## Description

### Technical Field

The present invention relates to an ultrasonic flow meter device which measures a fluid such as gas or liquid by using an ultrasonic wave.

### Background Art

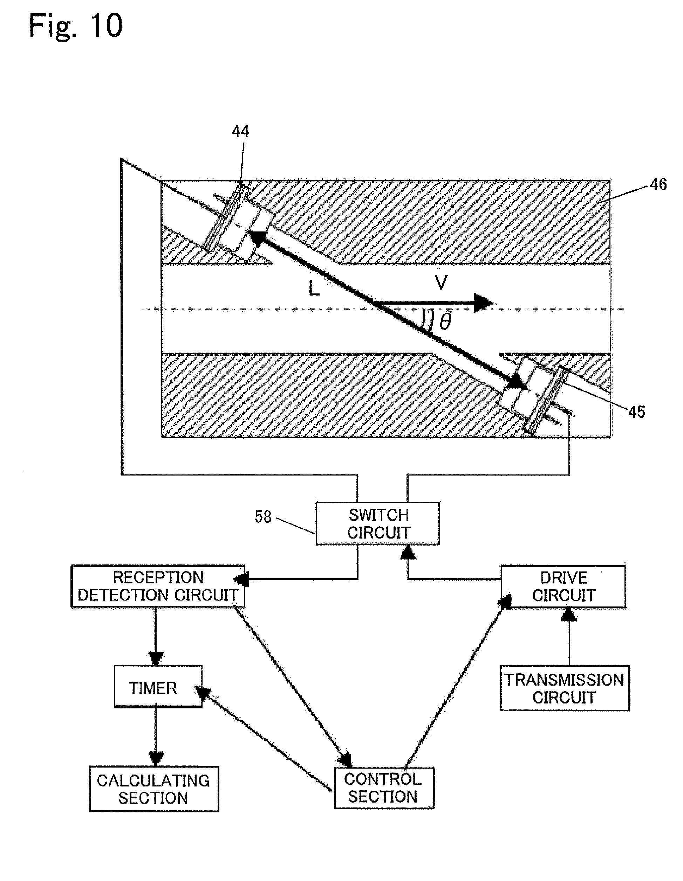

There is known an ultrasonic flow meter device configured in such a manner that ultrasonic transmitters/receivers attached on and inserted in a casing are electrically connected to a control section and a fluid flow is measured by using an ultrasonic wave generated by the ultrasonic transmitters/receivers. As shown in Fig. 10, this type of ultrasonic flow meter device typically includes ultrasonic transmitters/receivers 44, 45, a casing 46, a control section 57, a switch circuit 58, a transmission circuit, a drive circuit, a reception detection circuit, a timer, a calculating section, etc., (In Fig. 10, for the sake of convenience, no reference symbols are assigned to the transmission circuit, the drive circuit, the reception detection circuit, the timer, and the calculating section). The casing 46 includes a fluid passage. The ultrasonic transmitters/receivers 44, 45 are attached on the casing 46 and are positioned to sandwich the fluid passage and face each other. The switch circuit 58 performs switching such that one of the ultrasonic transmitters/receivers 44, 45 is a transmission device and the other is a receiving device. The switch circuit 58, the transmission circuit, the drive circuit, the timer, and others are controlled by the control section 57.

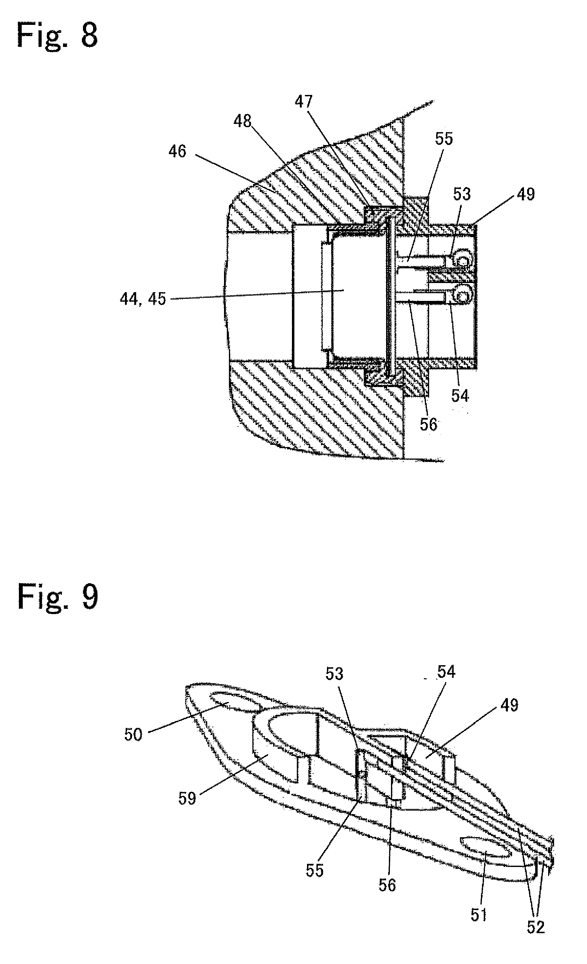

The ultrasonic transmitters/receivers 44, 45 for use in the ultrasonic flow meter device having the above configuration are typically configured as shown in Figs. 8 and 9. As shown in Fig. 8, the ultrasonic transmitter/receiver 44 (45) is fastened to the casing 46 by means of a fastener member 49 in a state where the ultrasonic transmitter/receiver 44 (45) is attached with a vibration transmission suppressing element 47 for suppressing a vibration generated in the ultrasonic transmitter/receiver 44 (45) from being directly transmitted to the casing 46, and a direction suppressing element 48. As shown in Fig. 9, the fastener member 49 has screw holes 50, 51. The ultrasonic transmitter/receiver 44 (45) and the fastener member 49 are fastened to the casing 46 by means of screws (not shown) inserted into the screw holes 50, 51, respectively.

As shown in Figs. 8 and 9, lead wires 52 are coupled to the ultrasonic transmitter/receiver 44 (45) in such a manner that lead wire terminals 53, 54 are coupled to electrode pins 55, 56, respectively, at an angle of 90 degrees. The lead wires 52 connect the ultrasonic transmitter/receiver 44 (45) to the switch circuit 58. Commonly, the switch circuit 58 is integrated into a single control board together with the control section 57. Therefore, it may be said that the lead wires 52 serve as wires to connect the ultrasonic transmitter/receiver 44 (45) to the control board.

For example, as shown in Fig. 9, Patent Literature 1 discloses the fastener member 49 having a protection wall 59. Since the protection wall 59 is provided higher than the lead wire terminals 53, 54, the lead wire terminals 53, 54 do not contact each other and therefore are less likely to get short-circuited. In addition, the lead wire terminals 53, 54 are less likely to be subjected to an impact directly, and therefore deformation of the lead wire terminals 53, 54 can be prevented.

### Citation Lists

### Patent Literature

Patent Literature 1 Japanese Laid-Open Patent Application Publication No. 2007-201992

### Summary of the Invention

### Technical Problem

In the above configuration, since the ultrasonic transmitter/receiver 44 (45) is coupled to the switch circuit 58 (or control board) by means of the lead wires 52, they can be connected together easily even when there is a distance between the ultrasonic transmitter/receiver 44 (45) and the switch circuit 58. However, the lead wires 52 are generally expensive. The use of two lead wires 52 as shown in Fig. 9 causes an increase in manufacturing cost of the ultrasonic flow meter device. If a whole length of the lead wires 52 is greater, the lead wires 52 may be affected by an outside noise. Furthermore, to prevent the lead wire terminals 53, 54 from getting short-circuited, the fastener member 49 including the protection wall 59, which has an intricate structure, as shown in Fig. 9 is needed.

The present invention is directed to solving the above mentioned problem, and an object of the present invention is to provide an ultrasonic flow meter device which can electrically connect ultrasonic transmitters/receivers to a control board, without the use of lead wires, can suppress an increase in manufacturing cost and has high reliability.

**Solution to Problem**

To solve the above mentioned problem, according to the present invention, an ultrasonic flow meter device comprises a casing including a fluid passage of a fluid which is a measurement target; an ultrasonic transmitter/receiver mounted to the casing; a control printed board positioned to face the ultrasonic transmitter/receiver; a compressive conductive fastener member retained between the ultrasonic transmitter/receiver and the control printed board and including a conductive part for electrically connecting the ultrasonic transmitter/receiver to the control printed board; and a control printed board fastener means for fastening the control printed board to the casing.

In the above configuration, the ultrasonic transmitter/receiver includes: a piezoelectric element having a pair of electrode surfaces facing each other; a case electrically connected to one of the electrode surfaces of the piezoelectric element; a terminal plate electrically connected to a flange of the case; an outside electrode provided on the terminal plate such that the outside electrode is electrically insulated from the terminal plate; a conductive element provided between the other of the electrode surfaces and the outside electrode; and an acoustic matching layer bonded to and secured to the case such that the acoustic matching layer faces the piezoelectric element.

In the above configuration, the compressive conductive fastener member may include a retaining means for retaining a portion of the ultrasonic transmitter/receiver which is in the vicinity of the flange of the case.

In the above configuration, the retaining means may include a sealing means for sealing a gap between the casing and the portion of the ultrasonic transmitter/receiver which is in the vicinity of the flange of the case.

In the above configuration, the compressive conductive fastener member may include a case contact portion configured to contact an outer periphery of the case.

In the above configuration, the compressive conductive fastener member may have a groove between the sealing means and the case contact portion.

In the above configuration, the compressive conductive fastener member may have a groove in the vicinity of an electric current passing section.

In the above configuration, the control printed board fastener means may include a spacer interposed between the casing and the control printed board such that the casing and the control printed board are spaced apart from each other.

In the above configuration, the ultrasonic flow meter device may comprise a fluid flow measuring section for measuring a fluid flow of a fluid flowing in the fluid passage; a pair of ultrasonic transmitters/receivers mounted on the same surface of the fluid flow measuring section such that ultrasonic waves transmitted from the ultrasonic transmitters/receivers travel in parallel; a measuring circuit for measuring an ultrasonic wave propagation time which passes from when the ultrasonic wave is transmitted from one of the ultrasonic transmitters/receivers, is reflected by an inner wall of the fluid flow measuring section, and is received by the other of the ultrasonic transmitters/receivers; and a calculating circuit for calculating the fluid flow based on a signal from the measuring circuit; wherein the measuring circuit and the calculating circuit are mounted onto the control printed board.

The above and further objects, features and advantages of the present invention will more fully be apparent from the following detailed description of preferred embodiments with accompanying drawings.

Advantageous Effects of the Invention

As described above, in accordance with the present invention, it is possible to achieve an advantage that an ultrasonic flow meter device can be provided, which electrically connects an ultrasonic transmitter/receiver to a control board substantially without using lead wires, suppresses an increase in manufacturing cost, and has a high reliability.

**Brief Description of the Drawings**

[Fig. 1] Fig. 1 is a schematic view showing an exemplary configuration of an ultrasonic flow meter device according to Embodiment 1 of the present invention.
[Fig. 2] Fig. 2 is a cross-sectional view of major components showing an exemplary mounting structure of an ultrasonic transmitter/receiver in the ultrasonic flow meter device of Fig. 1.
[Fig. 3] Fig. 3A is a cross-sectional view showing an exemplary configuration of a compressive conductive fastener member in the ultrasonic flow meter device of Fig. 1, and Fig. 3B is a plan view of the compressive conductive fastener member of Fig. 3A.
[Fig. 4] Fig. 4 is a cross-sectional view showing an exemplary configuration of a compressive conductive fastener member for use in an ultrasonic flow meter device according to Embodiment 2 of the present invention.

[Fig. 5] Fig. 5 is a cross-sectional view of major components showing an exemplary mounting structure of an ultrasonic transmitter/receiver using the compressive conductive fastener member of Fig. 4.

[Fig. 6] Fig. 6 is a cross-sectional view showing an exemplary configuration of a compressive conductive fastener member for use in an ultrasonic flow meter device according to Embodiment 3 of the present invention,

[Fig. 7] Fig. 7 is a cross-sectional view of major components showing an exemplary mounting structure of an ultrasonic transmitter/receiver using the compressive conductive fastener member of Fig. 6.

[Fig. 8] Fig. 8 is a schematic cross-sectional view showing an exemplary configuration of a conventional ultrasonic transmitter/receiver and a fastener member.

[Fig. 9] Fig. 9 is a perspective view showing an exemplary configuration of the fastener member of Fig. 8.

[Fig. 10] Fig. 10 is a block diagram including a partial cross-section of a flow meter device using the conventional ultrasonic transmitter/receiver of Fig. 8.

**Reference Signs Lists**

1    casing

| 1a, 1b | mounting hole |
| 2 | fluid passage |
| 6 | ultrasonic transmitter/receiver (upstream ultrasonic transmitter/receiver) |
| 7 | ultrasonic transmitter/receiver (downstream ultrasonic transmitter/receiver) |
| 8 | control printed board |
| 9 | compressive conductive fastener member (compressive conductive fastener member) |
| 12 | control printed board fastener means |
| 13 | measuring circuit |
| 14 | calculating circuit |
| 17 | piezoelectric element |
| 18 | case |
| 19 | flange |
| 20 | terminal plate |
| 21 | outside electrode |
| 22 | inner conductive element (conductive element) |
| 23 | acoustic matching layer |
| 25a, 22b, 42a, 42b | conductive part |
| 28a | recess (retaining means) |
| 29 | projection (sealing means) |
| 33 | compression rate restricting means |
| 41 | groove |

**Description of the Embodiments**

According to the present invention, an ultrasonic flow meter device comprises a casing including a fluid passage of a fluid which is a measurement target; an ultrasonic transmitter/receiver mounted to the casing; a control printed board positioned to face the ultrasonic transmitter/receiver; a compressive conductive fastener member (compressive conductive fastener member) retained between the ultrasonic transmitter/receiver and the control printed board and including a conductive part for electrically connecting the ultrasonic transmitter/receiver to the control printed board; and a control printed board fastener means for fastening the control printed board to the casing.

In accordance with the above configuration, in a state where the control printed board is fastened to the casing, the ultrasonic transmitter/receiver is electrically connected to the control printed board by means of the compressive conductive fastener member, thereby allowing the ultrasonic transmitter/receiver to be actuated. Therefore, there is no need for lead wires to electrically connect the ultrasonic transmitter/receiver to the control printed board, which can reduce cost. In addition, since the conductive part of the compressive conductive fastener member is short in length, an influence of a noise can be minimized and a signal can be processed easily.

The compressive conductive fastener member is required to have a shape covering the surface of the ultrasonic transmitter/receiver on the electrode side and its outer periphery. Since a fastener member having an intricate structure for fastening the ultrasonic transmitter/receiver is not necessary, components can be reduced in number. As a result, it is possible to provide an ultrasonic flow meter device which can avoid a cost increase and is highly reliable. If the ultrasonic flow meter device includes a compression rate restricting means for maintaining a compression rate of the compressive conductive fastener member at a specified compression rate, the compressive conductive fastener member can be compressed with a specified compression rate. This makes it possible to stably fasten the ultrasonic transmitter/receiver between the casing and the control printed board. In addition, a sealing function for preventing the fluid which is the measurement target from leaking from the fluid passage can be further improved.

In the flow meter device of the present invention, the ultrasonic transmitter/receiver may include a piezoelectric element having a pair of electrode surfaces facing each other; a case electrically connected to one of the electrode surfaces of the piezoelectric element; a terminal plate electrically connected to a flange of the case; an outside electrode provided on the terminal plate such that the outside electrode is electrically insulated from the terminal plate; a conductive element provided between the other of the electrode surfaces and the outside electrode; and an acoustic matching layer bonded to and secured to the case such that the acoustic matching layer faces the piezoelectric element.

In accordance with this configuration, since one of the electrode surfaces of the piezoelectric element can be coupled to the terminal plate which is the electrode via the case and the flange of the case, and the other electrode surface of the piezoelectric element can be coupled to the terminal plate and the outside electrode of the terminal plate which is located on the same surface as the terminal plate to be electrically insulated from the terminal plate. The electrode surfaces of the piezoelectric element can be electrically connected to the terminal plate and the outside electrode which are located on the same surface of the ultrasonic transmitter/receiver. Therefore, since the surface of the ultrasonic transmitter/receiver at the terminal plate side (electrode side) and the control printed board are arranged in parallel and fastened together, electric connection between the ultrasonic transmitter/receiver and the control printed board can be easily established. As a result, the ultrasonic flow meter device can be assembled more easily.

In the ultrasonic flow meter device of the present invention, the compressive conductive fastener member may include a retaining means for retaining a portion of the ultrasonic transmitter/receiver which is in the vicinity of the flange of the case. Since the compressive conductive fastener member and the ultrasonic transmitter/receiver can be treated together when the ultrasonic transmitter/receiver is mounted to the casing, the ultrasonic flow meter device can be assembled more easily.

In the flow meter device of the present invention, the retaining means may include a sealing means for sealing a gap between the casing and the portion of the ultrasonic transmitter/receiver which is in the vicinity of the flange of the case. Thus, merely by fastening the ultrasonic transmitter/receiver to the casing, the compressive conductive fastener member makes it possible to establish electric connection between the ultrasonic transmitter/receiver and the control printed board and implement sealing between the ultrasonic transmitter/receiver and the casing. In addition, transmission of a vibration of the ultrasonic wave to the casing can be lessened.

In the ultrasonic flow meter device of the present invention, the compressive conductive fastener member may include a case contact portion configured to contact an outer periphery of the case. This can attenuate a vibration generated in the case of the ultrasonic transmitter/receiver. Because of this, in a case where the acoustic matching layer is bonded to and secured to the case to face the piezoelectric element, the ultrasonic wave having a frequency required to measure the fluid flow can be transmitted from the acoustic matching layer effectively. As a result, measuring accuracy of the fluid flow can be enhanced.

In the ultrasonic flow meter device of the present invention, the compressive conductive fastener member may have a groove between the sealing means and the case contact portion.

In the ultrasonic flow meter device of the present invention, the compressive conductive fastener member may have a groove in the vicinity of the electric current passing section.

In accordance with this configuration, since the compressive conductive fastener member includes the groove, deformation of the electric current passing section in a compressed state is not transmitted to the sealing section. Thus, the electric current passing section can ensure stable contact resistance, and reliable sealing performance is attained.

In the ultrasonic flow meter device of the present invention, the control printed board fastener means may include a spacer interposed between the casing and the control printed board such that the casing and the control printed board are spaced apart from each other. This makes it possible to substantially prevent a vibration from the ultrasonic transmitter/receiver from being transmitted to the control printed board, and hence prevent an influence of a vibration on electronic components mounted on the control printed board effectively.

The ultrasonic flow meter device having the above configuration may comprise a fluid flow measuring section for measuring a fluid flow of a fluid flowing in a fluid passage; a pair of ultrasonic transmitters/receivers mounted on the same surface of the fluid flow measuring section such that ultrasonic waves transmitted from the ultrasonic transmitters/receivers travel in parallel; a measuring circuit for measuring an ultrasonic wave propagation time which passes from when the ultrasonic wave is transmitted from one of the ultrasonic transmitters/receivers, is reflected by an inner wall of the fluid flow measuring section, and is received by the other of the ultrasonic transmitters/receivers; and a calculating circuit for calculating the fluid flow based on a signal from the measuring circuit; wherein the measuring circuit and the calculating circuit may be mounted onto the control printed board. Thus, measuring accuracy with high reliability can be attained.

Hereinafter, preferred embodiments of the present invention will be described with reference to the drawings. Throughout the drawings, the same or corresponding components are identified by the same reference symbols and description thereof is omitted. The embodiments below are in no way intended to limit the present invention.

**(Embodiment 1)**

**[configuration and operation of ultrasonic flow meter device]**

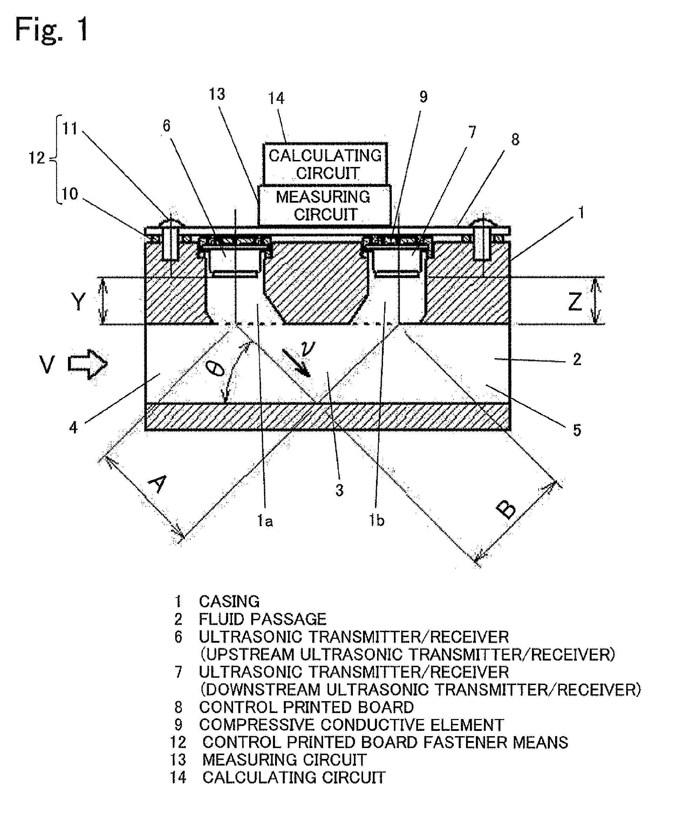

The configuration of an ultrasonic flow meter device according to Embodiment 1 of the present invention will be described with reference to Fig. 1. As shown in Fig. 1, the ultrasonic flow meter device according to Embodiment 1 of the present invention comprises a casing 1 having a fluid passage 2, an upstream ultrasonic transmitter/receiver 6, a downstream ultrasonic transmitter/receiver 7, a control printed board 8, and a compressive conductive fastener member (compressive conductive fastener member) 9.

In the interior of the casing 1, the fluid passage 2 is provided to penetrate the casing 1. The fluid passage 2 is a space in which a fluid flows, whose flow is to be measured by the ultrasonic flow meter device. The fluid may be LP gas, natural gas, etc., in a case where the ultrasonic flow meter device is applied to a gas meter. A fluid flow measuring section 3 is provided in a center portion of the fluid passage 2. The fluid flow measuring section 3 is a region in which the fluid flow of the fluid flowing through the fluid passage 2 is measured. The upstream ultrasonic transmitter/receiver 6 and the downstream ultrasonic transmitter/receiver 7 are attached on a portion (upper surface in Fig. 1) facing the fluid flow measuring section 3. In the configuration shown in Fig. 1, a left side is an upstream side 4 of the fluid flow measuring section 3, while a right side is a downstream side 5 of the fluid flow measuring section 3.

As shown in Fig. 1, the control printed board 8 is mounted on one surface of the casing 1. The upstream ultrasonic transmitter/receiver 6 and the downstream ultrasonic transmitter/receiver 7 are mounted to two mounting holes 1a, 1b provided in the casing 1 to allow communication between the fluid passage 2 and the control printed board 8, via compressive conductive fastener members 9, respectively. When the surface of the casing 1 on which the control printed board 8 is mounted is referred to as a board mounting surface, the mounting holes 1a, 1b are provided to extend from the board mounting surface to the fluid flow measuring section 3 of the fluid passage 2 and positioned at the upstream side 4 and at the downstream side 5, respectively. The upstream ultrasonic transmitter/receiver 6 is mounted to the mounting hole 1a positioned at the upstream side 4 via the compressive conductive fastener member 9, while the downstream ultrasonic transmitter/receiver 7 is mounted to the mounting hole 1b positioned at the downstream side 5 via the compressive conductive fastener member 9.

In the configuration shown in Fig. 1, the mounting holes 1a, 1b extend in a direction substantially perpendicular to the direction of the fluid passage 2. Therefore, the upstream ultrasonic transmitter/receiver 6 and the downstream ultrasonic transmitter/receiver 7 are laid out such that ultrasonic waves transmitted from the ultrasonic transmitters/receivers 6, 7 travel in parallel. The mounting holes 1a, 1b are inclined such that their openings at the fluid passage 2 side face each other. The openings of the mounting holes 1a, 1b which are at the board mounting surface side are substantially perpendicular to the control printed board 8. The openings of the mounting holes 1a, 1b which are at the board mounting surface side have a greater inner diameter to allow the compressive conductive fastener members 9 to be fitted thereinto, when the upstream ultrasonic transmitter/receiver 6 and the downstream ultrasonic transmitter/receiver 7 are mounted to the casing 1, via the compressive conductive fastener members 9, respectively.

The control printed board 8 is configured in such a manner that the measuring circuit 13, the calculating circuit 14, a transmission circuit (not shown in Fig. 1), a drive circuit (not shown in Fig. 1), a switch circuit (not shown in Fig. 1), a reception/detection circuit (not shown in Fig. 1), etc., are mounted onto a board. Therefore, the control printed board 8 constitutes a control section in the ultrasonic flow meter device of the present embodiment. Among the circuits, the measuring circuit 13 is a measuring means (measuring section, measuring unit) for measuring a propagation time of the ultrasonic wave propagated between the upstream ultrasonic transmitter/receiver 6 and the downstream ultrasonic transmitter/receiver 7, and the calculating circuit 14 is a calculating means (calculating section, calculator) for calculating a flow velocity and/or a fluid flow based on a signal from the measuring circuit 13.

A specific configuration of the control printed board 8 is not particularly limited, but may be a known printed board. Specific circuits incorporated into the control printed board 8 are not particularly limited, but may be known circuits based on a processed content. Alternatively, the calculating circuit 14 may be replaced by a configuration including an arithmetic element such as CPU and a memory section. In this case, at least any one of the circuits such as the measuring circuit 13 may be implemented by the CPU's operation executed based on a program stored in the memory section, i.e., a functional configuration of the control section.

As the casing 1, the upstream ultrasonic transmitter/receiver 6 and the downstream ultrasonic transmitter/receiver 7, those known in the art of the ultrasonic flow meter device may be suitably used. In the present invention, since the ultrasonic transmitters/receivers 6, 7 are electrically connected to the control printed board 8 via the compressive conductive fastener members 9, the lead wires are not necessary. Because of this, the ultrasonic transmitters/receivers 6, 7 may be configured not to have the electrode pins although it depends on a specific configuration of the compressive conductive fastener members 9. The compressive conductive fastener member 9 will be described later.

The control printed board 8 is fastened to the board mounting surface of the casing 1 via a control printed board fastener means 12. In the present embodiment, the control printed board fastener means 12 includes spacers 10 and screws 11. Although specifically not shown in Fig. 1, the spacer 10 is substantially annular and is positioned between the casing 1 and the control printed board 8 in a state where the screw 11 is inserted into a hollow space of the spacer 10. The spacer 10 serves as a spacing retaining member for retaining a predetermined spacing between the control printed board 8 and the board mounting surface of the casing 1, and as a "washer" for the screw 11.

As the spacer 10, a known substantially annular elastic element may be used. Likewise, as the screw 11, a known metal-made screw may be suitably used. The control printed board fastener means 12 is not limited to an example in which it includes the spacer 10 and the screw 11, but may be a combination of any one of known spacing retaining members and any one of known fastener members. Moreover, a known board fastener member may be used, with which the control printed board 8 can be fastened to the casing 1 by mechanical fitting or engagement.

Now, the operation of the ultrasonic flow meter device configured as described above will be described specifically. As shown in Fig. 1, it is supposed that a distance between an ultrasonic wave transmission/reception surface of the upstream ultrasonic transmitter/receiver 6 and the fluid passage 2 is Y, an ultrasonic wave transmission/reception surface of the downstream ultrasonic transmitter/receiver 7 and the fluid passage 2 is Z, a distance over which the ultrasonic wave from the upstream ultrasonic transmitter/receiver 6 is propagated to a surface of the fluid passage 2 which faces the upstream ultrasonic transmitter/receiver 6 is A, a distance over which the ultrasonic wave from the downstream ultrasonic transmitter/receiver 7 is propagated to a surface of the fluid passage 2 which faces the downstream ultrasonic transmitter/receiver 7 is B, and an angle formed between the transmission direction of the ultrasonic wave and a lengthwise direction of the fluid passage 2 which is a flow direction of the fluid which is a measurement target is θ.

In addition to the above, a distance (Y + A + B + Z) between a center of the upstream ultrasonic transmitter/receiver 6 and a center of the downstream ultrasonic transmitter/receiver 7 is LSL, a distance (A + B) over which the fluid which is a measurement target flows in the fluid passage 2 is L, a sound velocity of the fluid which is not moving is C, and a flow velocity of the fluid in the fluid passage 2 is V.

The ultrasonic wave is transmitted from the upstream ultrasonic transmitter/receiver 6 in the fluid flow measuring section 3, travels across the fluid passage 2 in an oblique direction and is received by the downstream ultrasonic transmitter/receiver 7. In this case, a propagation time t1 is expressed as a formula 1:

$$t1 = ((LSL - L) / C) 2 + (L/(C + V\cos\theta)) \ldots \text{formula 1}$$

Then, the ultrasonic wave is transmitted from the downstream ultrasonic transmitter/receiver 7 and is received by the upstream ultrasonic transmitter/receiver 6. In this case, a propagation time t2 is expressed as a formula 2:

$$t2 = ((LSL - L) / C) 2 + (L/(C - V\cos\theta)) \ldots \text{formula 2}$$

From the formula of t1 and the formula of t2, the sound velocity C of the fluid is deleted, which results in a formula (3):

$$V = L /2\cos\theta (1/t1 - 1/t2) ((LSL/L) 2) \ldots \text{formula (3)}$$

If LSL, L and θ are known, then the flow velocity V is derived by measuring t1 and t2 by the measuring circuit 13. From the flow velocity V, a fluid flow Q can be calculated by Q = KSV by the calculating circuit 14 based on the flow velocity V when the cross-sectional area of the fluid passage 2 is S, and a correction coefficient is K.

[Configuration of compressive conductive fastener member]

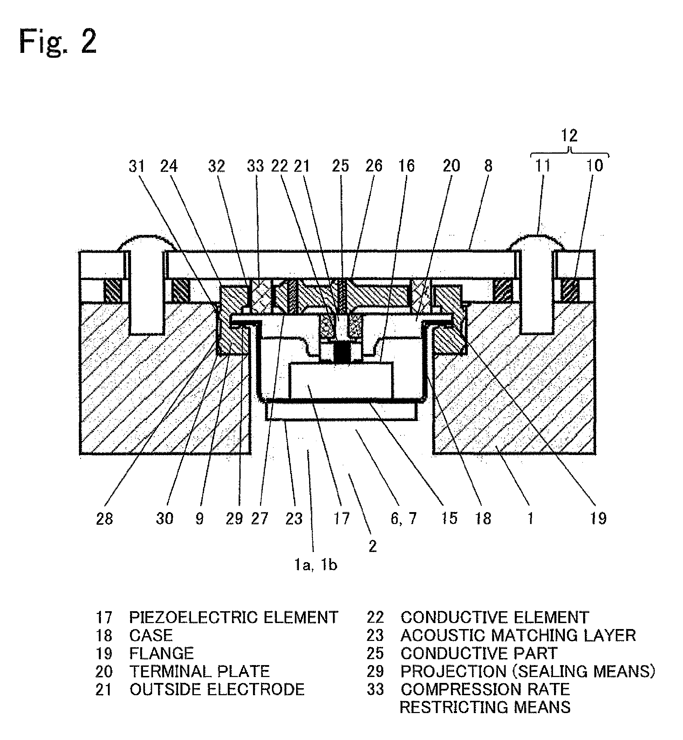

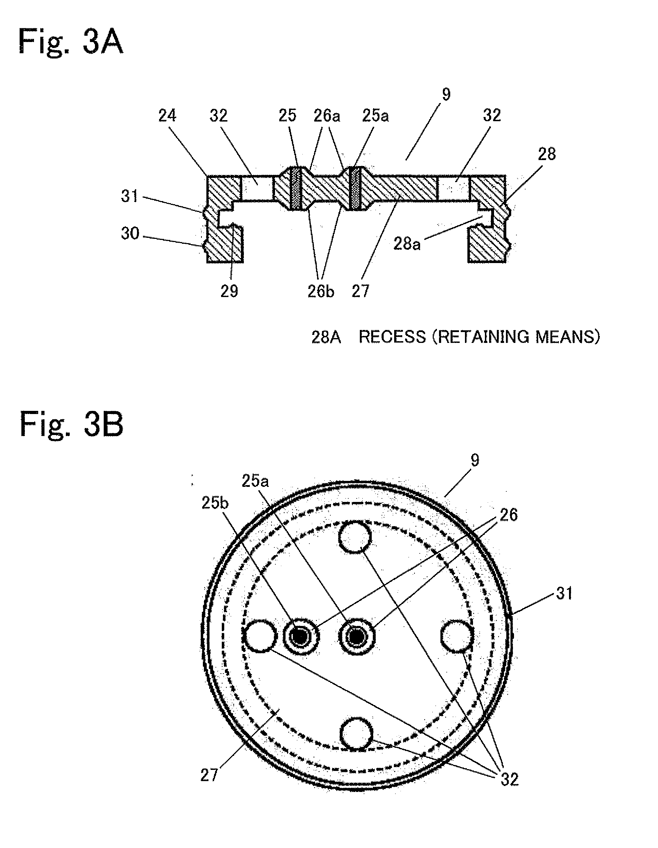

Next, a description will be specifically given of the compressive conductive fastener member 9 used to electrically connect the ultrasonic transmitter/receiver 6(7) to the control printed board 8 and to fasten the ultrasonic transmitter/receiver 6(7) to the casing 1 with reference to Fig. 2, and Figs. 3A and 3B.

As shown in Fig. 2, the ultrasonic transmitter/receiver 6(7) includes a piezoelectric element 17, a case 18, a terminal plate 20, an outside electrode 21, an inner conductive element 22, and an acoustic matching layer 23. The piezoelectric element 17 has electrode surfaces 15, 16 which face each other. The electrode surface 15 is electrically connected to the case 18, while the electrode surface 16 is electrically connected to the outside electrode 21 via the inner conductive element 22. The electrode surface 15 faces the fluid passage 2 (fluid flow measuring section 3), while the electrode surface 16 faces the control printed board 8.

The case 18 is an exterior package of the ultrasonic transmitter/receiver 6(7) and has a cylindrical shape or a circular-hat shape. The case 18 is configured to accommodate the piezoelectric element 17. The case 18 has a bottomed tube shape, one end surface thereof is closed and the other end surface thereof is open to form an opening. An inner side of the closed end surface of the case 18 is electrically connected to the electrode surface 15 of the piezoelectric element 17. The acoustic matching layer 23 is bonded and secured to outside of the closed end surface of the case 18 in a location facing the piezoelectric element 17. The acoustic matching layer 23 and the closed end surface of the case 18 are the transmission/reception surface of the ultrasonic wave.

A flange 19 is provided to enclose the open end surface (opening) of the case 18. The opening of the case 18 is closed by a terminal plate 20 of a disc-shape. The terminal plate 20 not only closes the opening but has a dimension for allowing the outer periphery of the terminal plate 20 to overlap with the flange 19. The flange 19 and the terminal plate 20 are electrically connected together. As shown in Fig. 2, the terminal plate 20 is at an opposite side of the acoustic matching layer 23 and constitutes a surface electrically connected to the control printed board 8.

The outside electrode 21 is provided at a center portion of the terminal plate 20 such that the outside electrode 21 is electrically insulated from the terminal plate 20. In the present embodiment, the outside electrode 21 is mounted to a hole formed in the center portion of the terminal plate 20 via an insulating member. One end of the outside electrode 21 is exposed to outside of the ultrasonic transmitter/receiver 6(7), while the other end (opposite end) thereof is electrically connected to the inner conductive element 22 provided inside the case 18. The inner conductive element 22 is electrically connected to the electrode surface 16 of the piezoelectric element 17, and therefore, the piezoelectric element 17 is electrically connected to the outside electrode 21.

The compressive conductive fastener member 9 is mounted to outside of the terminal plate 20 and the flange 19 of the case 18 in the ultrasonic transmitter/receiver 6(7). The compressive conductive fastener member 9 is configured to fasten the ultrasonic transmitter/receiver 6(7) to the casing 1 and electrically connect the control printed board 8 to the ultrasonic transmitter/receiver 6(7). Therefore, as shown in Fig. 2, the compressive conductive fastener member 9 is provided between the ultrasonic transmitter/receiver 6(7) and the control printed board 8 and between the ultrasonic transmitter/receiver 6(7) and the casing 1.

In the present embodiment, as shown in Fig. 2 and Fig. 3A, the compressive conductive fastener member 9 includes an elastic compression body 24 and two conductive parts 25a, 25b. The elastic compression body 24 is a base body of the compressive conductive fastener member 9 and is made of a known rubber (elastomer) material, a synthetic resin material or a composition material (e.g., polymer alloy) containing these. The elastic compression body 24 has a circular-disc shape and includes a bottom surface section 27 and a frame-shaped sealing section 28 extending vertically from the outer periphery of the bottom surface section 27. As shown in Fig. 3B, the bottom surface section 27 is provided with the conductive part 25a penetrating a center thereof, and the conductive part 25b penetrating a portion thereof which is eccentric from the center.

The conductive parts 25a, 25b are made of known electrically conductive elastic members. The conductive parts 25a, 25b are inserted into holes formed through the bottom surface section 27, respectively, and thereby are secured to the compressive conductive fastener member 9. As shown in Fig. 3A, in the bottom surface section 27, around the holes into which the conductive parts 25a, 25b are inserted, respectively, outside protruding portions 26a are provided on the outer surface (upper surface in Fig. 3A) and inside protruding portions 26b are provided on the inner surface (lower surface in Fig. 3A).

As shown in Fig. 2, the conductive part 25a at the center is positioned between the outside electrode 21 of the ultrasonic transmitter/receiver 6(7) and the control printed board 8 and is in contact with them. The conductive part 25a allows the electrode surface 16 of the piezoelectric element 17, the inner conductive element 22 and the outside electrode 21 to be electrically connected to the control printed board 8. Since the conductive part 25b is eccentric from the center, it is configured to contact any portion of the terminal plate 20 insulated from the outside electrode 21. Therefore, the conductive part 25b allows the electrode surface 15 of the piezoelectric element 17, the case 18, the flange 19 and the terminal plate 20 to be electrically connected to the control printed board 8. A greater part of the terminal plate 20, except for the outside electrode 21 provided at the center, constitutes a ring-shaped electrode. Therefore, the conductive part 25b can ensure electric connection so long as it is eccentric from the center, and its position in a rotational direction is not particularly limited.

Each of the outside protruding portions 26a is formed as a convex portion having a trapezoidal cross-sectional shape protruding outward, while each of the inside protruding portions 26b is formed as a convex shape having a trapezoidal cross-sectional shape protruding inward. The outside protruding portions 26a are in the vicinity of contact portions with the control printed board 8 when viewed from the conductive parts 25a, 25b. The inside protruding portions 26b are in the vicinity of contact portions with the terminal plate 20 when viewed from the conductive parts 25a, 25b. As described later, the compressive conductive fastener member 9 in a compressed state is mounted to the casing 1 and is in contact with the control printed board 8. Therefore, to ensure a compression rate of the compressive conductive fastener member 9 in a compressed state, the outside protruding portions 26a are provided around the conductive parts 25a, 25b and the inside protruding portions 26b are provided around the conductive parts 25a, 25b.

As described above, the sealing section 28 of the compressive conductive fastener member 9 is provided in the form of the frame around the bottom surface section 27. As shown in Fig. 3, a recess 28a is provided on an inner side of the sealing section 28. The flange 19 (and outer peripheral portion of the terminal plate 20 which overlaps with the flange 19) of the ultrasonic transmitter/receiver 6(7) is fitted into the recess 28a and retained by the sealing section 28. Therefore, the sealing section 28 functions as a retaining means of the ultrasonic transmitter/receiver 6(7).

As shown in Fig. 3A, a projection 29 is provided on a surface of the recess 28a which faces the bottom surface section 27, while an upper projection 30 and a lower projection 31 are provided on the outer periphery of the sealing section 28. The projections 29, 30 and 31 serve as stoppers in a state where the ultrasonic transmitter/receiver 6(7) is mounted to the casing 1 by means of the compressive conductive fastener member 9. To be more specific, the projection 29 serves as the stopper to prevent the flange 19 from being disengaged easily from the recess 28a in a state where the flange 19 of the ultrasonic transmitter/receiver 6(7) is fitted into the recess 28a. The projections 30, 31 serve as stoppers to prevent the compressive conductive fastener member 9 and the ultrasonic transmitter/receiver 6(7) from being disengaged from the mounting hole 1a(1b) in a state where the ultrasonic transmitter/receiver 6(7) is fastened to the mounting hole 1a(1b) of the casing 1 via the compressive conductive fastener member 9.

As shown in Fig. 2, the opening of the mounting hole 1a(1b) at the board mounting surface side has a greater inner diameter, and forms a recess for receiving the compressive conductive fastener member 9 (and the ultrasonic transmitter/receiver 6(7)) in a state where the compressive conductive fastener member 9 (and the ultrasonic transmitter/receiver 6(7)) are fitted thereinto. Since the compressive conductive fastener member 9 is compressive, the projections 30, 31 are pressed against the inner wall of the opening at the board mounting surface side by compression of the compressive conductive fastener member 9 in a state where the compressive conductive fastener member 9 (and the ultrasonic transmitter/receiver 6(7)) are mounted to the opening at the board mounting surface side. Therefore, the projections 30, 31 serve as the stoppers effectively.

As shown in Fig. 2, compression rate restricting means 33 are provided between the ultrasonic transmitter/receiver 6(7) and the control printed board 8 to penetrate the compressive conductive fastener member 9. As shown in Figs. 3A and 3B, a plurality of through-holes 32 are provided on the bottom surface section 27 of the compressive conductive fastener member 9. In the example of Fig. 3B, through-holes 32 are provided in four locations which form 90 degrees with respect to a center (conductive part 25a) of the bottom surface section 27. The compression rate restricting means 33 may be made of a material which is higher in stiffness than the compressive conductive fastener member 9. The function of the compression rate restricting means 33 will be described later.

Next, a description will be specifically given of a method (main part of an assembling method of the ultrasonic flow meter device) of mounting the ultrasonic transmitter/receiver 6(7) to the casing 1 using the compressive conductive fastener member 9 having the above configuration. Initially, in a state where the sealing section 28 of the compressive conductive fastener member 9 is fitted to the flange 19 of the ultrasonic transmitter/receiver 6(7), the ultrasonic transmitter/receiver 6(7) (and the compressive conductive fastener member 9) are inserted into the mounting hole 1a(1b) of the casing 1. Then, the compression rate restricting means 33 are inserted into the through-holes 32 of the compressive conductive fastener member 9. Then, in a state where the spacers 10 are retained between the casing 1 and the control printed board 8, the control printed board 8 is fastened to the casing 1 by means of the screws 11. At this time, the conductive part 25a is in contact with an electric current passing section (not shown) between the outside electrode 21 and the control printed board 8, thus forming an electric circuit, while the conductive part 25b is in contact with an electric current passing section (not shown) between the terminal plate 20 and the control printed board 8, thus forming an electric circuit.

In the present embodiment, the control printed board 8 is fastened to the casing 1 via the spacers 10 by means of the screws 11 by using the compression rate restricting means 33, thereby restricting a compression dimension of the outside protruding portions 26a and a compression dimension of the inside protruding portions 26b of the compressive conductive fastener member 9. This allows the conductive parts 25a, 25b to be in contact with the control printed board 8 and the ultrasonic transmitter/receiver 6(7) with a specified force. Therefore, electric contact between the ultrasonic transmitter/receiver 6(7) and the control printed board 8 can be ensured stably.

Since the spacers 10 are interposed between the casing 1 and the control printed board 8 to prevent direct contact between them, it is possible to prevent a vibration originating from the ultrasonic transmitter/receiver 6(7) from being transmitted to the control printed board 8. As a result, it is possible to suppress or avoid an influence of the vibration which will be transmitted to electronic components (not shown) incorporated into the control printed board 8.

Because of the presence of the compression rate restricting means 33, the terminal plate 20 of the ultrasonic transmitter/receiver 6(7) is pressed toward the fluid passage 2 via the compression rate restricting means 33 by mounting the control printed board 8 to the casing 1. For this reason, since the projection 29 inside the recess 28a of the sealing section 28 is compressed all the time, it is possible to effectively prevent the fluid which is a measurement target from leaking from inside of the fluid passage 2 to outside of the fluid passage 2.

As should be appreciated from the above, the ultrasonic flow meter device of the present embodiment includes the ultrasonic transmitters/receivers 6, 7, the casing 1 including the fluid passage 2, and the control printed board 8. The casing 1 is provided with the board mounting surface to which the control printed board 8 is mounted, and the mounting holes 1a, 1b by which the ultrasonic transmitters/receivers 6, 7 are mounted to the casing 1, respectively. The mounting holes 1a, 1b are provided at the upstream side 4 and at the downstream side 5, respectively, to extend from the board mounting surface toward the fluid passage 2. Further, the ultrasonic flow meter device of the present embodiment includes the compressive conductive fastener member 9 which is made of a compressive material, has a shape covering the surface of the ultrasonic transmitter/receiver 6(7) on which the electrodes (terminal plate 20 and outside electrode 21) are provided, and its outer periphery, and is provided with the two conductive parts 25a, 25b which provide electric connection between the electrodes and the control printed board 8.

In accordance with this configuration, in a state where the terminal plate 20 and the outside electrode 21 of the ultrasonic transmitter/receiver 6(7) are covered with the compressive conductive fastener member 9, the ultrasonic transmitter/receiver 6(7) and the compressive conductive fastener member 9 may be inserted into and mounted to the mounting hole 1a(1b). This allows the compressive conductive fastener member 9 to be retained between the ultrasonic transmitter/receiver 6(7) and the control printed board 8 facing it. Therefore, merely by fastening the control printed board 8 to the casing 1, the ultrasonic transmitter/receiver 6(7) and the control printed board 8 can contact each other such that they are electrically connected to each other via the two conductive parts 25a, 25b of the compressive conductive fastener member 9. Therefore, the ultrasonic transmitter/receiver 6 (7) and the control printed board 8 can be electrically connected to the control printed board 8 without using lead wires, and the conductive parts 25a, 25b will not get short-circuited. As a result, it is possible to provide a highly reliable ultrasonic flow meter device.

(**Embodiment 2**)

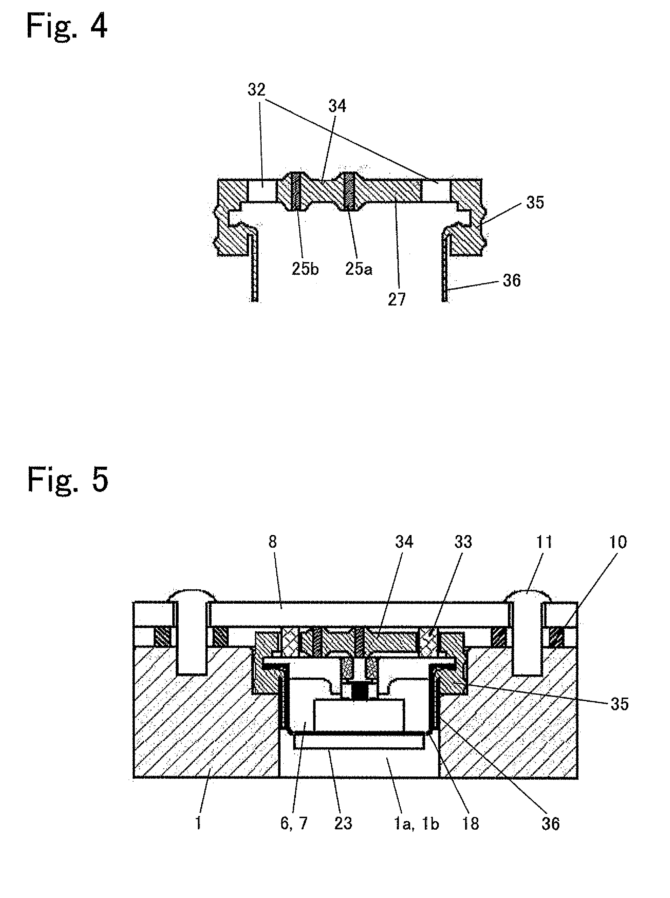

The configuration of an ultrasonic flow meter device according to Embodiment 2 of the present invention will be described with reference to Figs. 4 and 5. As shown in Fig. 4, a compressive conductive fastener member 34 for use in the present embodiment is similar in configuration to the compressive conductive fastener member 9 described in Embodiment 1, but is different from the same in that a case contact portion 36 is provided at a tip end of a sealing section 35. The sealing section 35 has a frame shape extending vertically in one direction (toward the lower side in Figs. 4 and 5) from the outer periphery of the bottom surface section 27. The case contact portion 36 has a thin wall shape extending vertically in the same direction (toward the lower side in Figs. 4 and 5) as the sealing section 35 extends, in the inner peripheral portion of the frame-shaped sealing section 35. The case contact portion 36 is in contact with the outer peripheral surface of the case 18 to cover the outer peripheral surface of the case 18 in a state where the compressive conductive fastener member 34 is mounted to the ultrasonic transmitter/receiver 6(7).

Therefore, as shown in Fig. 5, in a state where the ultrasonic transmitter/receiver 6(7) and the compressive conductive fastener member 34 are mounted to the casing 1 and are positioned between the casing 1 and the control printed board 8, the case contact portion 36 is interposed between the inner peripheral surface of the mounting hole 1a (1b) and the outer peripheral surface (outer peripheral surface of the case 18) of the ultrasonic transmitter/receiver 6(7).

It is required that the case contact portion 36 be provided integrally with the sealing section 35. Therefore, the case contact portion 36 may be made of an elastic material such as a rubber material or a synthetic resin material. The case contact portion 36 is required to have a height which can sufficiently cover the outer peripheral surface (outer peripheral surface of the case 18) of the ultrasonic transmitter/receiver 6(7). The case contact portion 36 is required to have a thickness which can attenuate an unnecessary ultrasonic vibration as described later. The dimensions of the case contact portion 36 such as the height and thickness may be set to proper values depending on the type of the ultrasonic transmitter/receiver 6(7).

In the ultrasonic transmitter/receiver 6(7), an ultrasonic wave having a frequency (referred to as measurement ultrasonic wave for the sake of convenience in explanation) required to measure a fluid flow is generated in the acoustic matching layer 23. In some cases, an ultrasonic vibration (referred to as a noise vibration for easier explanation) having a frequency which is not necessary for measurement of the fluid flow is generated on the surface of the case 18. In the present embodiment, the case contact portion 36 in contact with the case 18 can attenuate the noise vibration generated on the surface of the case 18. In the ultrasonic flow meter device of the present embodiment, only the measurement ultrasonic wave generated in the acoustic matching layer 23 can be transmitted to the fluid flow measuring section 3 (not shown in Fig. 5). As a result, more stable measurement can be performed.

The ultrasonic flow meter device of the present embodiment is identical in configuration to the ultrasonic flow meter device of Embodiment 1 except for the compressive conductive fastener member 34 including the case contact portion 36, and is identical in assembling method and operation to the ultrasonic flow meter device of Embodiment 1. Therefore, description of them will not be given.

(**Embodiment 3**)

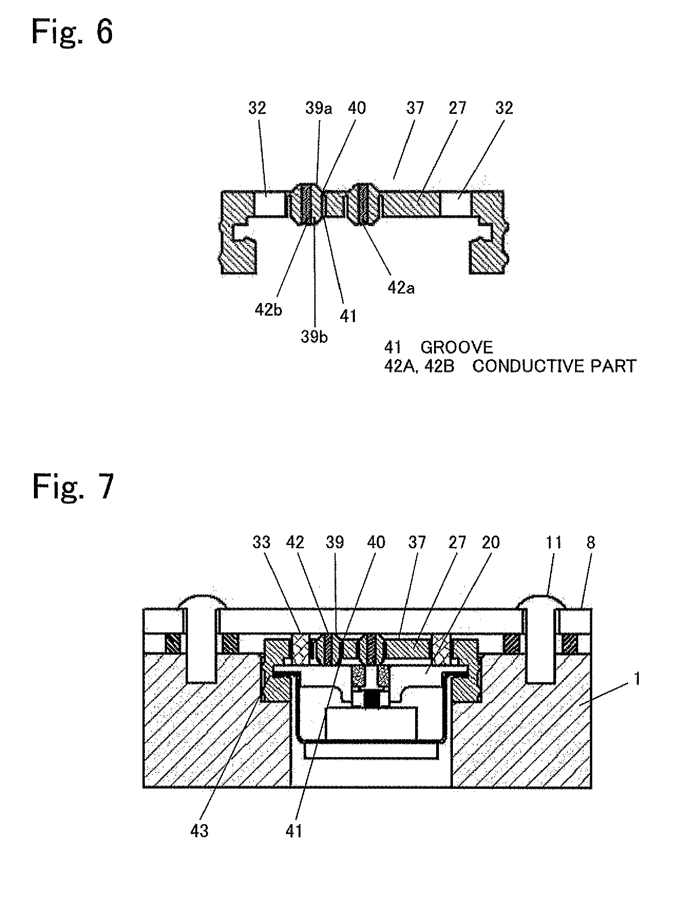

The configuration of an ultrasonic flow meter device according to Embodiment 3 of the present invention will be described with reference to Figs. 6 and 7. As shown in Fig. 6, a compressive conductive fastener member 37 for use in the present embodiment is identical in configuration to the compressive conductive fastener member 9 of Embodiment 1 and the compressive conductive fastener member 34 of Embodiment 2, except that thinned wall portions 40 are provided around outside protruding portions 39a located in the vicinity of (i.e., in the vicinity of contact portions with the control printed board 8) conductive parts 42a, 42b, while grooves 41 are provided around inside protruding portions 39b located in the vicinity of the conductive parts 42a, 42b. That is, the compressive conductive fastener member 37 has a shape in which its outer surface (upper surface in Fig. 6) forms a substantially flat surface except for the conductive parts 42a, 42b and the outside protruding portions 39a, and the grooves 41 are formed on its inner surface (lower surface in Fig. 6) around the inside protruding portions 39b to extend from the inner surface to the outer surface (because of this, portions corresponding to the grooves 41 on the outer surface are the thinned wall portions 40).

The thickness of the thinned wall portion 40, i.e., the depth of the groove 41 is not particularly limited. The groove 41 is required to have a depth for lessening deformation of the compressive conductive fastener member 37 which is compressed in a thickness direction of the bottom surface section 27. By comparison, the thinned wall portion 40 is required to have a thickness which can maintain a strength for allowing the conductive parts 42a, 42b, the outside protruding portions 39a, and the inside protruding portions 39b to be integrated with the bottom surface section 27 of the compressive conductive fastener member 37. Therefore, the thickness of the thinned wall portion 40 and the depth of the groove 41 can be set to proper values depending on conditions in which the ultrasonic transmitter/receiver 6(7) is mounted to the casing 1.

As described in Embodiment 1, as shown in Fig. 7, the compressive conductive fastener member 37 is provided between the control printed board 8 and the terminal plate 20 of the ultrasonic transmitter/receiver 6(7). By fastening the control printed board 8 to the casing 1 by means of the screws 11, the conductive parts 42a, 42b and portions (outside protruding portions 39a, inside protruding portions 39b) in the vicinity of the conductive parts 42a, 42b are compressed in the thickness direction of the bottom surface section 27. In this case, a compression rate is restricted at a specified value by the compression rate restricting means 33.

Since the compressive conductive fastener member 37 has the grooves 41, deformation of the conductive parts 42a, 42b and the portions in the vicinity of the conductive parts 42a, 42b which are in a compressed state can be lessened by the grooves 41. This makes it possible to substantially avoid a situation in which deformation of the conductive parts 42a, 42b and the portions in the vicinity of the conductive parts 42a, 42b is transmitted to the sealing section 43 through the bottom surface section 27. This allows the conductive parts 42a, 42b to ensure a stable contact state between the ultrasonic transmitter/receiver 6(7) and the control printed board 8, and the overall compressive conductive fastener member 37 to maintain a more suitable sealed state. The ultrasonic flow meter device of the present embodiment is identical in configuration to the ultrasonic flow meter device of Embodiment 1 except for the compressive conductive fastener member 37 including the thinned wall portions 40 and the grooves 41, and is identical in assembling method and operation to the ultrasonic flow meter device of Embodiment 1. Therefore, description of them will not be given. The specific configuration of the groove 41 (and thinned wall portion 40) is not limited to the configuration shown in Figs. 6 and 7 so long as deformation of the conductive parts 42a, 42b and the portions in the vicinity of the conductive parts 42a, 42b which are in a compressed state can be lessened by the grooves 41, in a state where a gap of the casing 1 is sealed by the compressive conductive fastener member 37. Therefore, the groove 41 may be provided in a portion of the compressive conductive fastener member 37 which is other than the portion in the vicinity of the inside protruding portion 39b, or a separation configuration other than the groove 41 may be used. Or, the shape of the groove 41 may be any one of known various shapes.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

**Industrial Applicability**

As should be appreciated from the above, in accordance with the present invention, an ultrasonic transmitter/ receiver is coupled to a control printed board without a need for lead wires, in manufacturing of an ultrasonic flow meter device. This can effectively suppress a cost increase, and effectively lessen an influence of an outside noise because of the absence of the lead wires. Therefore, reliability of the ultrasonic transmitter/receiver can be improved. As a result, the present invention is widely applicable to fields of measurement of a fluid flow using the ultrasonic transmitter/receiver.

**Claims**

1.  An ultrasonic flow meter device comprising:

    a casing including a fluid passage of a fluid which is a measurement target;
    an ultrasonic transmitter/receiver mounted to the casing;
    a control printed board positioned to face the ultrasonic transmitter/receiver;
    a compressive conductive fastener member retained between the ultrasonic transmitter/receiver and the control printed board and including a conductive part for electrically connecting the ultrasonic transmitter/receiver to the control printed board; and
    a control printed board fastener means for fastening the control printed board to the casing.

2.  The ultrasonic flow meter device according to Claim 1,
    wherein the ultrasonic transmitter/receiver includes:

    a piezoelectric element having a pair of electrode surfaces facing each other;
    a case electrically connected to one of the electrode surfaces of the piezoelectric element;
    a terminal plate electrically connected to a flange of the case;
    an outside electrode provided on the terminal plate such that the outside electrode is electrically insulated from the terminal plate;
    a conductive element provided between the other of the electrode surfaces of the piezoelectric element and the outside electrode; and
    an acoustic matching layer bonded to and secured to the case such that the acoustic matching layer faces the piezoelectric element.

3.  The ultrasonic flow meter device according to Claim 2,
    wherein the compressive conductive fastener member includes a retaining means for retaining a portion of the ultrasonic transmitter/receiver which is in the vicinity of the flange of the case.

4.  The ultrasonic flow meter device according to Claim 3,
    wherein the retaining means includes a sealing means for sealing a gap between the casing and the portion of the ultrasonic transmitter/receiver which is in the vicinity of the flange of the case.

5.  The ultrasonic flow meter device according to Claim 2 or 3,
    wherein the compressive conductive fastener member includes a case contact portion configured to contact an outer periphery of the case.

6.  The ultrasonic flow meter device according to Claim 5,
    wherein the compressive conductive fastener member has a groove between the sealing means and the case contact portion.

7.  The ultrasonic flow meter device according to Claim 1,
    wherein the compressive conductive fastener member has a groove in the vicinity of an electric current passing section.

8.  The ultrasonic flow meter device according to Claim 1,
    wherein the control printed board fastener means includes a spacer interposed between the casing and the control printed board such that the casing and the control printed board are spaced apart from each other.

9.  The ultrasonic flow meter device according to Claim 1, comprising:

    a fluid flow measuring section for measuring a fluid flow of a fluid flowing in the fluid passage;
    a pair of ultrasonic transmitters/receivers mounted on the same surface of the fluid flow measuring section such that ultrasonic waves transmitted from the ultrasonic transmitters/receivers travel in parallel;
    a measuring circuit for measuring an ultrasonic wave propagation time which passes from when the ultrasonic wave is transmitted from one of the ultrasonic transmitters/receivers, is reflected by an inner wall of the fluid flow measuring section, and is received by the other of the ultrasonic transmitters/receivers; and
    a calculating circuit for calculating the fluid flow based on a signal from the measuring circuit;

wherein the measuring circuit and the calculating circuit are mounted onto the control printed board.

# Fig. 1

| 1 | CASING |
|---|---|
| 2 | FLUID PASSAGE |
| 6 | ULTRASONIC TRANSMITTER/RECEIVER (UPSTREAM ULTRASONIC TRANSMITTER/RECEIVER) |
| 7 | ULTRASONIC TRANSMITTER/RECEIVER (DOWNSTREAM ULTRASONIC TRANSMITTER/RECEIVER) |
| 8 | CONTROL PRINTED BOARD |
| 9 | COMPRESSIVE CONDUCTIVE ELEMENT |
| 12 | CONTROL PRINTED BOARD FASTENER MEANS |
| 13 | MEASURING CIRCUIT |
| 14 | CALCULATING CIRCUIT |

# Fig. 2

| 17 | PIEZOELECTRIC ELEMENT | 22 | CONDUCTIVE ELEMENT |
|----|----------------------|----|--------------------|
| 18 | CASE | 23 | ACOUSTIC MATCHING LAYER |
| 19 | FLANGE | 25 | CONDUCTIVE PART |
| 20 | TERMINAL PLATE | 29 | PROJECTION (SEALING MEANS) |
| 21 | OUTSIDE ELECTRODE | 33 | COMPRESSION RATE RESTRICTING MEANS |

# Fig. 3A

28A   RECESS (RETAINING MEANS)

# Fig. 3B

Fig. 4

Fig. 5

Fig. 6

41  GROOVE
42A, 42B  CONDUCTIVE PART

Fig. 7

# Fig. 8

# Fig. 9

# Fig. 10

<center>**INTERNATIONAL SEARCH REPORT**</center>

| | International application No. |
|---|---|
| | PCT/JP2010/006731 |

**A. CLASSIFICATION OF SUBJECT MATTER**
*G01F1/66*(2006.01)i, *H04R1/06*(2006.01)i

According to International Patent Classification (IPC) or to both national classification and IPC

**B. FIELDS SEARCHED**

Minimum documentation searched (classification system followed by classification symbols)
G01F1/66, H04R1/00-1/44, H01R23/68, H01R11/01

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2003-270011 A (Matsushita Electric Industrial Co., Ltd.), 25 September 2003 (25.09.2003), paragraphs [0020] to [0035]; fig. 1 to 3 (Family: none) | 1-9 |
| Y | JP 7-49915 Y2 (Murata Mfg. Co., Ltd.), 13 November 1995 (13.11.1995), column 4, line 17 to column 6, line 26; fig. 1 to 3 (Family: none) | 1-9 |
| Y | JP 60-23901 Y2 (Casio Computer Co., Ltd.), 16 July 1985 (16.07.1985), column 2, line 13 to column 5, line 2; fig. 1 to 2 (Family: none) | 1-9 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 04 February, 2011 (04.02.11) | 22 February, 2011 (22.02.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/006731

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2001-159551 A (Matsushita Electric Industrial Co., Ltd.), 12 June 2001 (12.06.2001), paragraphs [0015] to [0058]; fig. 1 to 8 (Family: none) | 3-6 |

Form PCT/ISA/210 (continuation of second sheet) (July 2009)

22

**EP 2 503 304 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007201992 A